(19) Europäisches Patentamt / European Patent Office / Office européen des brevets

(11) **EP 4 203 403 B1**

(12) **FASCICULE DE BREVET EUROPEEN**

(45) Date de publication et mention de la délivrance du brevet:
**22.05.2024 Bulletin 2024/21**

(51) Classification Internationale des Brevets (IPC):
**H04L 27/14** (2006.01)   **H04B 7/08** (2006.01)
**H04B 17/00** (2015.01)

(21) Numéro de dépôt: **22214790.2**

(52) Classification Coopérative des Brevets (CPC):
**H04L 27/14**

(22) Date de dépôt: **20.12.2022**

(54) **PROCEDE DE TRAITEMENT D'UN SIGNAL ANALOGIQUE MODULE EN FREQUENCE DANS UN RECEPTEUR DE COMMUNICATION SANS FIL, PROGRAMME D'ORDINATEUR ET RECEPTEUR DE COMMUNICATION SANS FIL ASSOCIES**

VERFAHREN ZUR VERARBEITUNG EINES FREQUENZMODULIERTEN ANALOGSIGNALS IN EINEM DRAHTLOSEN KOMMUNIKATIONSEMPFÄNGER, ENTSPRECHENDES COMPUTERPROGRAMM UND DRAHTLOSER KOMMUNIKATIONSEMPFÄNGER

METHOD FOR PROCESSING A FREQUENCY-MODULATED ANALOG SIGNAL IN A WIRELESS COMMUNICATION RECEIVER, ASSOCIATED COMPUTER PROGRAM AND WIRELESS COMMUNICATION RECEIVER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2021 FR 2114059**

(43) Date de publication de la demande:
**28.06.2023 Bulletin 2023/26**

(73) Titulaire: **THALES**
**92190 Meudon (FR)**

(72) Inventeurs:
• **MILLE, Kévin**
**92622 GENNEVILLIERS Cedex (FR)**
• **PIPON, François**
**92622 GENNEVILLIERS Cedex (FR)**
• **KERJEAN, Bruno**
**92622 GENNEVILLIERS Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A2- 1 753 155     US-B2- 7 697 913**

• **BRENDEL JOHANNES ET AL: "A link quality indicator for analog FM transmission systems", 2013, 7TH INTERNATIONAL CONFERENCE ON SIGNAL PROCESSING AND COMMUNICATION SYSTEMS (ICSPCS), IEEE, 16 décembre 2013 (2013-12-16), pages 1-5, XP032555413, DOI: 10.1109/ICSPCS.2013.6723964**
• **Shima James Michael: "FM DEMODULATION USING A DIGITAL RADIO AND DIGITAL SIGNAL PROCESSING", University of Florida, 1 janvier 1995 (1995-01-01), XP055951141, Extrait de l'Internet: URL:http://www.hyperdynelabs.com/dspdude/papers/DigRadio_w_mathcad.pdf [extrait le 2022-08-12]**

**Description**

**Domaine technique** :

L'invention se situe dans le domaine de la communication sans fil mettant en oeuvre des modulations de fréquence.

Plus exactement, l'invention se rapporte à un procédé de traitement d'un signal analogique modulé en fréquence dans un récepteur de communications sans fil, ledit procédé comprenant les étapes suivantes :

- réception dudit signal analogique modulé en fréquence par un signal utile ;
- traitement dudit signal reçu comprenant une démodulation en fréquence dudit signal analogique reçu.

**Technique antérieure** :

La technique de modulation analogique par modulation de fréquence (FM) est communément utilisée pour des missions de type ISR (renseignement/surveillance/reconnaissance) ou CAS (appui aérien rapproché). Il existe des équipements de transmission par exemple qui disposent historiquement d'un mode de transmission de vidéos analogiques au standard NTSC ou PAL, modulées en fréquence. C'est un mode de transmission très utilisé par les forces d'intervention notamment, pour des raisons d'interopérabilité.

La modulation analogique en modulation de fréquence est toutefois peu robuste au bruit du canal de propagation,

Les documents suivants reflètent l'état de la technique:

- US 7 697 913 B2;
- BRENDEL JOHANNES ET AL: "A link quality indicator for analog FM transmission systems", 7TH INTERNATIONAL CONFERENCE ON SIGNAL PROCESSING AND COMMUNICATION SYSTEMS (ICSPCS), IEEE, 16 décembre 2013.

**Résumé de l'invention** :

A cet effet, suivant un premier aspect, la présente invention décrit un procédé de traitement d'un signal analogique modulé en fréquence dans un récepteur de communications sans fil tel que mentionné plus haut caractérisé en ce que , le récepteur comprenant Q antennes de réception et Q voies de traitement associées chacune à une antenne respective, avec $Q \geq 2$, les étapes suivantes sont mises en oeuvre sur chaque voie de traitement n° q du récepteur, q = 1 à Q pour obtenir le signal démodulé :

i/ ladite réception comprend la réception, par chacune des antennes associées aux voies, du signal analogique modulé en fréquence, et ledit traitement comprend, sur chaque voie q, l'échantillonnage du signal reçu par l'antenne associée à la voie q et l'obtention, par transposition dudit signal échantillonné en bande de base, des échantillons complexes $m_q(n)$ ;

ii/ obtention, sur chaque voie q, d'une première estimation des valeurs de signal utile $\hat{s}_q(n)$ en fonction desdits échantillons complexes $m_q(n)$ obtenus sur la voie q ;

iii/ sur chaque voie q, estimation du rapport signal sur bruit $\overline{RSB}_q$ en calculant $\overline{RSB}_q = \frac{S_q}{2.B_q}$ , avec $S_q = mod\_moy_q{}^2$, $B_q = \frac{1}{N}.\sum_{n=1}^{N}\left(mod\_moy_q - |m_q(n)|\right)^2$ et $mod\_moy_q = \sqrt{\frac{1}{N}.\sum_{n=1}^{N}|m_q(n)|^2}$ , où N est un entier fixé ;

iv/ puis détermination d'une seconde estimation $\hat{s}(n)$ du signal utile en fonction des Q estimations du rapport signal sur bruit $\overline{RSB}_q$ , q= 1 à Q et en fonction d'au moins une desdites premières estimations obtenues $\hat{s}_q(n)$ du signal utile, q = 1 à Q.

Un tel traitement permet d'obtenir en sortie du récepteur, un signal plus robuste.

Dans des modes de réalisation, un tel procédé comprendra en outre l'une au moins des caractéristiques suivantes :

- le procédé comprend, à l'étape iv/, une étape de comparaison entre elles des Q estimations du rapport signal sur bruit $\widehat{RSB_q}$ q= 1 à Q, puis une étape de détermination, en fonction de ladite comparaison, de quelle est la voie q0 parmi les voies 1 à Q sur laquelle le rapport signal sur bruit estimé est le plus grand, et la seconde estimation $\hat{s}(n)$ du signal utile est déterminée comme égale à ladite première estimation obtenue $\hat{s}_{q0}(n)$ du signal utile ;
- à l'étape iv/, on détermine la seconde estimation $\hat{s}(n)$ du signal utile, pour $n \in [1; N]$ en calculant :

$$\hat{s}(n) = \sum_{q=1}^{Q} \frac{\widehat{RSB_q}}{\widehat{RSB_{tot}}} . \hat{s}_q(n)$$

avec $\widehat{RSB_{tot}} = \sum_{q=1}^{Q} \widehat{RSB_q}$ ;

- à l'étape ii, on obtient sur chaque voie q, une première estimation des valeurs de signal utile $\hat{s}_q(n)$ en fonction desdits échantillons complexes $m_q(n)$ obtenus sur la voie q, par la formule suivante :

$$\hat{s}_q(n) = \frac{F_e}{2\pi.\Delta f} . arg\big(m_q(n).m_q(n-1)^*\big), \qquad q \in [1; Q]$$

où $\Delta f$ est l'excursion de fréquence du signal modulé et $F_e$ la fréquence d'échantillonnage ;
- le signal utile comprend une vidéo analogique au standard PAL ou NTSC.

Suivant un autre aspect, l'invention décrit un programme d'ordinateur destiné à être stocké dans la mémoire d'un récepteur de communication sans fil d'un signal analogique modulé en fréquence et comprenant en outre un microcalculateur, ledit programme d'ordinateur comprenant des instructions qui, lorsqu'elles sont exécutées sur le microcalculateur, mettent en oeuvre les étapes i, ii, iii et iv d'un procédé suivant le premier aspect de l'invention.
Suivant un autre aspect, l'invention décrit un récepteur de communications sans fil adapté pour traiter un signal de communication analogique modulé en fréquence, ledit récepteur étant adapté pour recevoir le signal analogique modulé en fréquence par un signal utile et ledit traitement du signal reçu comprenant une démodulation en fréquence dudit signal analogique reçu ;
ledit récepteur étant caractérisé en ce qu'il comprend Q antennes de réception adaptées chacune pour recevoir le signal analogique modulé en fréquence et Q voies de traitement associées chacune à une antenne respective, avec $Q \geq 2$, et en ce que le traitement par le récepteur sur chaque voie de traitement q, q = 1 à Q, comprend :

i/ l'échantillonnage du signal reçu et l'obtention, par transposition dudit signal échantillonné en bande de base, des échantillons complexes $m_q(n)$ ;
ii/ l'obtention, sur chaque voie q, d'une première estimation des valeurs de signal utile $\hat{s}_q(n)$ en fonction desdits échantillons complexes $m_q(n)$ obtenus sur la voie q ;

iii/ sur chaque voie q, estimation du rapport signal sur bruit $\widehat{RSB_q}$ en calculant $\widehat{RSB_q} = \frac{S_q}{2.B_q}$ , avec $S_q = mod\_moy_q^2$, $B_q = \frac{1}{N}.\sum_{n=1}^{N}\left(mod\_moy_q - |m_q(n)|\right)^2$ et

$$mod\_moy_q = \sqrt{\frac{1}{N}.\sum_{n=1}^{N}|m_q(n)|^2} ,$$

où N est un entier fixé ;

le récepteur étant adapté pour déterminer une seconde estimation $\hat{s}(n)$ du signal utile en fonction des Q estimations du rapport signal sur bruit $\overline{RSB}_q$ , q= 1 à Q et en fonction d'au moins une desdites premières estimations obtenues $\hat{s}_q(n)$ du signal utile, q = 1 à Q.

Dans des modes de réalisation, un tel récepteur comprendra en outre l'une au moins des caractéristiques suivantes :

- le récepteur est adapté pour comparer entre elles les Q estimations du rapport signal sur bruit $\overline{RSB}_q$ q= 1 à Q, et pour déterminer, en fonction de ladite comparaison, quelle est la voie q0 parmi les voies 1 à Q sur laquelle le rapport signal sur bruit estimé est le plus grand, et pour déterminer la seconde estimation $\hat{s}(n)$ du signal utile comme égale à ladite première estimation obtenue $\hat{s}_{q0}(n)$ du signal utile ;

- le récepteur de communications sans fil est adapté pour déterminer la seconde estimation $\hat{s}(n)$ du signal utile, pour $n \in [1; N]$ en calculant :

$$\hat{s}(n) = \sum_{q=1}^{Q} \frac{\overline{RSB}_q}{\overline{RSB}_{tot}} . \hat{s}_q(n)$$

avec $\overline{RSB}_{tot} = \sum_{q=1}^{Q} \overline{RSB}_q$ ;

- sur chaque voie q, le traitement par ledit récepteur comprend une première estimation des valeurs de signal utile $\hat{s}_q(n)$ en fonction desdits échantillons complexes $m_q(n)$ obtenus sur la voie q, par la formule suivante :

$$\hat{s}_q(n) = \frac{F_e}{2\pi.\Delta f} . arg\big(m_q(n).m_q(n-1)^*\big), \qquad q \in [1;Q]$$

où $\Delta f$ est l'excursion de fréquence du signal modulé et $F_e$ la fréquence d'échantillonnage.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple.

La figure 1 est une illustration d'un récepteur de communication sans fil dans un mode de réalisation ;

La figure 2 représente les étapes d'un procédé de traitement d'un signal analogique modulé en fréquence dans un mode de réalisation de l'invention ;

La figure 3 représente des images reconstituées dans un mode de réalisation de l'invention avec différents rapports signal sur bruit et différentes configurations antennaires ;

La figure 4 représente des images reconstituées dans un mode de réalisation de l'invention avec différentes configurations antennaires.

Des références identiques peuvent être utilisées dans des figures différentes lorsqu'elles désignent des éléments identiques ou comparables.

**Description détaillée :**

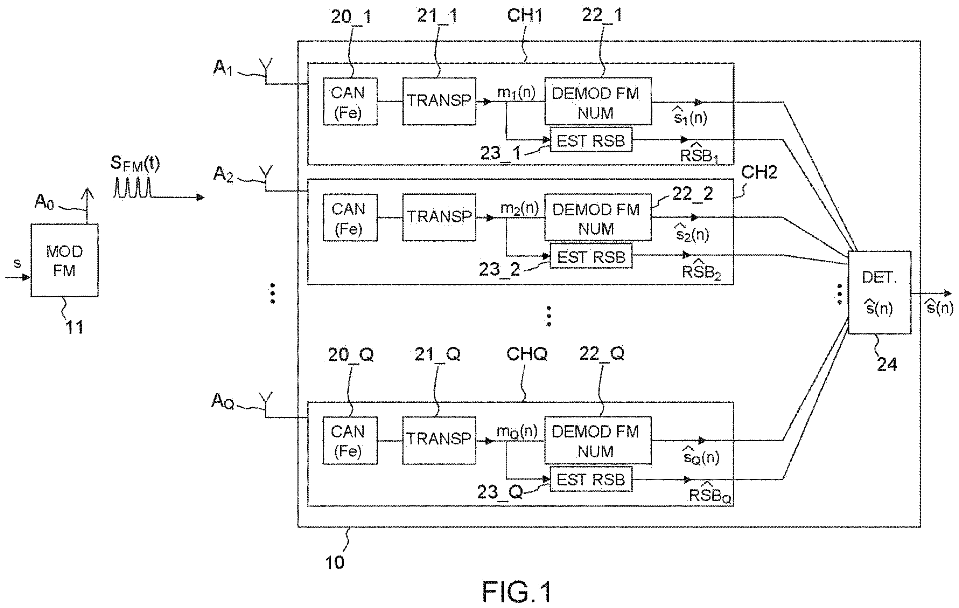

La figure 1 représente un système de communication sans fil comprenant un ou plusieurs émetteurs de modulation de fréquence analogique, par exemple l'émetteur 11 et un ou plusieurs récepteurs de modulation de fréquence analogique, par exemple le récepteur 10 de communication sans fil, qui implémente un mode de réalisation de l'invention.

De façon connue, un signal utile, nommé s(t), est fourni en entrée de l'émetteur 11. Ce dernier comprend un modulateur qui est adapté pour utiliser ce signal utile et une porteuse de fréquence $f_p$ (la fréquence $f_p$ étant bien plus élevée que la fréquence du signal utile), connue de l'émetteur et du (ou des) récepteur et transformer les variations dans le temps du signal utile s(t) en variations proportionnelles de la fréquence instantanée du signal émis $S_{FM}(t)$ sur la base de la porteuse, puis pour émettre $S_{FM}(t)$ par l'intermédiaire d'une antenne d'émission A0 sur le canal de propagation correspondant à la porteuse.

Le signal réel $S_{FM}(t) = A_p.cos[2\pi.f(t).t]$, $A_p$ étant une constante, $f(t)$ étant la fréquence instantanée, peut s'écrire, de façon connue :

$$S_{FM}(t) \; = \; A_p.cos[2\pi.f_p.t + 2\pi.\Delta f.\int_0^t s(\tau)d\tau]$$

Avec $s(t)$ le signal utile, et $\Delta f$ l'excursion de fréquence.

Le signal analogique modulé en fréquence $S_{FM}(t)$ ainsi émis se propage depuis l'antenne A0.

On notera que la fréquence de la porteuse émise peut prendre des valeurs diverses, en HF, VHF, UHF, bandes L, C ...et que le signal utile peut lui aussi être de nature variée : audio, vidéo, données autres ...

Le signal utile s, que l'on transmet ainsi en faisant, dans l'émetteur 11, varier la fréquence du signal émis $S_{FM}$ est analogique et la porteuse est analogique. Le signal modulé analogique, ici $S_{FM}(t)$, résultant de la transformation de la porteuse par le signal utile $s(t)$, est continu et peut prendre n'importe quelle valeur (dans une plage donnée). Le signal analogique modulé en fréquence $S_{FM}(t)$ est ensuite reçu par le récepteur de modulation FM analogique 10 dans un mode de mise en oeuvre de l'invention.

Le récepteur de modulation FM analogique 10 comprend Q antennes de réception $A_q$, q = 1 à Q, adaptées pour recevoir le signal issu de l'émission de $S_{FM}(t)$, Q étant un entier supérieur ou égal à 2, Q voies de traitement $CH_q$ et un module de détermination du signal démodulé 24.

La chaîne de traitement $CH_q$, q = 1 à Q, est adaptée pour recevoir en entrée le signal délivré par l'antenne $A_q$ et comporte un module électronique Convertisseur Analogique Numérique (CAN) 20_q, un module électronique transposeur de fréquence 21_q, un module électronique de démodulation FM numérique 22_q et un module électronique d'estimation du rapport signal sur bruit 23_q.

Le CAN 20_q est adapté pour effectuer une numérisation (i.e. échantillonnage et quantification) du signal reçu par l'antenne $A_q$ à la fréquence d'échantillonnage $F_e$.

Le module électronique transposeur de fréquence 21_q est adapté pour, de façon connue, transposer le signal ainsi numérisé par le CAN 20_q de la fréquence $f_p$ en bande de base et pour délivrer des échantillons complexes $m_q(n)$ (les parties réelles et imaginaires correspondant aux sorties des voies respectivement en phase et en quadrature du transposeur de fréquence).

Le module électronique de démodulation FM numérique 22_q est adapté pour effectuer une démodulation FM à partir des échantillons complexes $m_q(n)$ fournis par le transposeur de fréquence 21_q et délivrer le signal numérisé démodulé $\hat{s}_q(n)$.

Le module électronique d'estimation du rapport signal sur bruit 23_q est adapté pour effectuer une estimation du rapport signal sur bruit, $\widehat{RSB}_q$, du signal reçu sur la voie q en fonction des échantillons complexes $m_q(n)$ fournis par le transposeur de fréquence 21_q.

Le module de détermination du signal démodulé 24 est adapté pour collecter en entrée les signaux numérisés démodulés $\hat{s}_q(n)$ et les rapports signal sur bruit $\widehat{RSB}_q$ obtenus sur les voies $CH_q$, q = 1 à Q et pour déterminer une estimation du signal utile $\hat{s}(n)$ à partir de ces éléments collectés.

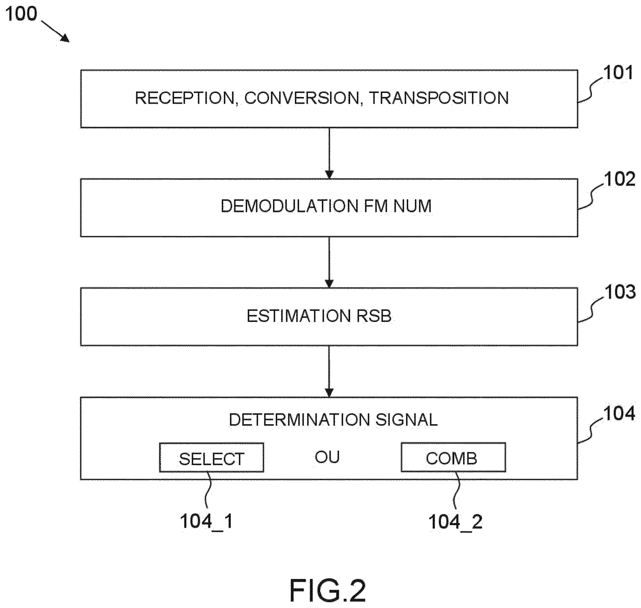

Le détail des opérations effectuées par le récepteur de modulation FM analogique 10 est maintenant décrit en référence à la figure 2, illustrant les étapes d'un procédé 100 de traitement d'un signal analogique modulé en fréquence qui est mis en oeuvre, dans un mode de réalisation, par le récepteur 10.

Dans une étape 101, chaque antenne $A_q$ reçoit une onde issue de l'émission du signal $S_{FM}(t)$ et la transforme en signal électrique, q = 1 à Q ; sur chaque voie $CH_q$, ce signal est échantillonné par le CAN 20_q à la fréquence $F_e$, puis les échantillons résultants subissent une transposition en bande de base effectuée par le transposeur de fréquence 21_q, qui délivre les échantillons complexes issus de cette transposition ; on considère un ensemble d'échantillons complexes successifs ainsi obtenus, notés $m_q(n)$, n = 1 à N, N est un entier définissant la taille de la fenêtre d'intérêt (par exemple N est choisi entre 100 et 1000) ; la valeur de N est réglée en fonction du temps de cohérence du canal de propagation.

Dans une étape 102, sur chaque voie $CH_q$, le module électronique de démodulation FM numérique 22_q calcule les échantillons réels $\hat{s}_q(n)$ du signal numérisé démodulé à partir des échantillons complexes $m_q(n)$, en appliquant la formule suivante :

$$\hat{s}_q(n) = \frac{F_e}{2\pi.\Delta f}.\arg\big(m_q(n).m_q(n-1)^*\big), \ q \in [1; Q] \qquad \text{formule (1)}$$

où :

$F_e$ est la fréquence d'échantillonnage des CAN 20_q, en ech/s ;
$\Delta f$ est l'excursion de fréquence, en Hz/V de $S_{FM}(t)$ ;
( )* est la fonction « conjugué complexe ».

En effet en notant :

$s(n)$ : qui correspondrait à des échantillons réels du signal s en entrée du modulateur,
$b_q(n)$ : échantillons complexes de bruit additif en entrée du démodulateur, sur la voie de réception d'indice q,
on a :

$$m_q(n) = e^{i2\pi\frac{\Delta f}{Fe}\sum_{k=1}^{n} s(k)} + b_q(n).$$

Et donc :

$$m_q(n+1) = e^{i2\pi\frac{\Delta f}{Fe}\sum_{k=1}^{n+1} s(k)} + b_q(n+1).$$

En négligeant le bruit $b_q(n)$, on remarque que : $m_q(n+1).m_q(n)^* \approx e^{i2\pi\frac{\Delta f}{Fe}s(n+1)}$ et on en déduit la Formule (1).

Dans une étape 103, qui, suivant les modes de réalisation, se déroule avant ou en parallèle ou après l'étape 102, sur chaque voie de réception $CH_q$, le module d'estimation du rapport signal sur bruit 23_q estime le rapport signal sur bruit, $\widehat{RSB}_q$, en fonction des échantillons complexes $m_q(n)$ fournis par le transposeur de fréquence 21_q en appliquant la formule suivante :

$$\widehat{RSB}_q = \frac{S_q}{2.B_q} \qquad \text{formule (2)}$$

En effet, comme la modulation FM est à enveloppe constante, on peut estimer le rapport signal sur bruit en mesurant la dispersion du module instantanée. En notant :

$$mod\_moy_q = \sqrt{\frac{1}{N}.\sum_{n=1}^{N}\big|m_q(n)\big|^2},$$

l'estimation de la puissance du signal est $S_q = mod\_moy_q^2$. L'estimation de la puissance du bruit est $B_q = \frac{1}{N}.\sum_{n=1}^{N}\big(mod\_moy_q - \big|m_q(n)\big|\big)^2$. On obtient alors pour estimation du rapport signal sur bruit la formule (2), sur la base du signal analogique FM numérisé reçu sur la voie q :

Dans une étape 104, le module de détermination du signal démodulé 24 détermine une estimation du signal utile $\hat{s}(n)$ en fonction des signaux numérisés démodulés $\hat{s}_q(n)$ et des rapports signal sur bruit $\widehat{RSB}_q$ obtenus sur les voies $CH_q$, q = 1 à Q.

Dans un mode de réalisation de cette étape 104 (étape 104_1), le module de détermination du signal démodulé 24 compare entre eux les $\widehat{RSB}_q$ pour q = 1 à Q, pour déterminer le plus fort rapport signal sur bruit parmi les Q valeurs, et il sélectionne le signal démodulé $\hat{s}_{q0}(n)$ qui correspond à la voie de réception ($CH_{q0}$) possédant le plus fort rapport signal sur bruit parmi les Q voies : l'estimation du signal utile $\hat{s}(n)$ délivrée en sortie du démodulateur FM 10 est alors choisie égale à $\hat{s}_{q0}(n)$ :

$$\hat{s}(n) = \hat{s}_{q0}(n)$$

Suivant les modes de réalisation, on sélectionne les N échantillons $\hat{s}_{q0}(n)$, n = 1 à N comme échantillons de sortie du démodulateur, ou ces étapes sont réitérées pour chaque échantillon en considérant à chaque fois une fenêtre de taille N comprenant les N-1 échantillons le précédant et lui-même.

Dans un autre mode de réalisation de cette étape 104 (étape 104_2), le module de détermination du signal démodulé 24 effectue une recombinaison MRC (Maximal Ratio Combining) des Q voies de réception pondérées par les rapports signal sur bruit respectifs.

Pour ce faire, il calcule une estimation du rapport signal sur bruit total :

$$\widehat{RSB}_{tot} = \sum_{q=1}^{Q} \widehat{RSB}_q.$$

Puis il calcule la recombinaison MRC : $\hat{s}(n) = \sum_{q=1}^{Q} \frac{\widehat{RSB}_q}{\widehat{RSB}_{tot}} . \hat{s}_q(n), n \in [1; N]$ et délivre alors cette valeur en sortie du démodulateur FM 10. Comme ci-dessus, les fenêtres de taille N se succèdent ou se chevauchent suivant les modes de réalisation.

Un récepteur de modulation FM selon l'invention permet d'améliorer les performances de réception et la qualité du signal délivré en sortie du récepteur FM, notamment en le rendant plus robuste au bruit du canal de propagation, au masquage d'antenne et au dépointage d'antenne.

Dans un mode de réalisation, le récepteur de communication 10 comprend une mémoire dans lequel sont stockées des instructions logicielles et un microprocesseur ; et certaines au moins des fonctions des blocs CAN 20_q, de transposition de fréquence 21_q, de démodulation numérique 22_q, d'estimation du rapport signal sur bruit 23_q et/ou de détermination de $\hat{s}(n)$ 24 sont mises en oeuvre suite à l'exécution sur le microprocesseur desdites instructions logicielles, q= 1 à Q.

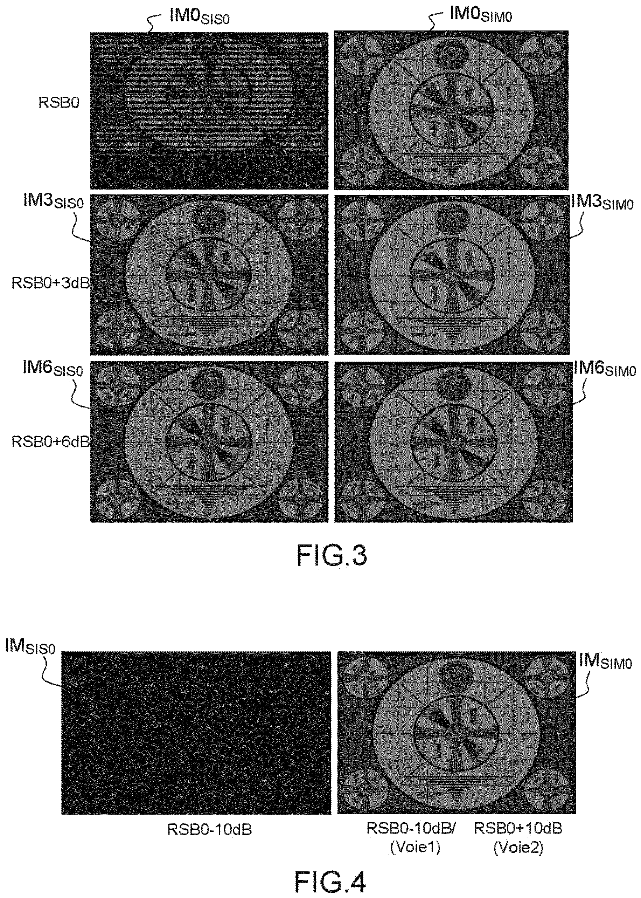

La figure 3 illustre les résultats obtenus par la mise en oeuvre de l'invention avec un récepteur avec recombinaison MRC (étape 104_2) et comprenant Q = 4 antennes (colonne de droite) comparé à la réception avec une seule antenne (colonne de gauche) pour différentes valeurs de rapport signal sur bruit. Trois rangs d'images sont présentés : un rang supérieur, un rang intermédiaire et un rang inférieur. Les images du rang intermédiaire correspondent à un RSB de 3 dB de plus que le RSB, nommé RSBO, des images du rang supérieur ; les images du rang inférieur correspondent à un RSB de 6 dB de plus que les images du rang supérieur. La figure 3 illustre un cas où les 4 voies sont homogènes en termes de RSB. Le signal utile considéré ici est une mire vidéo analogique, PAL ou NTSC, qui se trouve donc numérisée par le récepteur en suite d'images matricielles.

Ainsi pour les images de RSB égal à RSBO (rang supérieur), la perte de certaines lignes est à signaler dans l'image IM0$_{SISO}$ obtenue avec une seule antenne tandis que l'image est correcte dans l'image IM0$_{SIMO}$ obtenue dans le récepteur dans un mode de réalisation de l'invention avec 4 antennes.

Pour les images avec un rapport signal à bruit égal à RSBO + 3 dB (rang intermédiaire), des erreurs de synchronisation sur certaines lignes apparaissent dans l'image IM3$_{SISO}$ obtenue avec une seule antenne tandis que l'image est correcte dans l'image IM3$_{SIMO}$ obtenue dans le récepteur dans un mode de réalisation de l'invention avec 4 antennes.

Pour un rapport signal à bruit égal à RSBO + 6 dB (rang inférieur), l'image IM6$_{SISO}$ obtenue est correcte avec une seule antenne ainsi que l'image IM6$_{SIMO}$ obtenue dans le récepteur dans un mode de réalisation de l'invention avec 4 antennes. On note, dans un mode de réalisation de l'invention, un gain de 6 dB avec un récepteur avec Q = 4 antennes et utilisant la recombinaison MRC par rapport au résultat obtenu avec une seule antenne. On note, dans un mode de réalisation de l'invention, un gain de 3 dB, par rapport au résultat obtenu avec une seule antenne, avec un récepteur avec Q = 2 antennes et utilisant la recombinaison MRC.

La figure 4 illustre les résultats obtenus par la mise en oeuvre de l'invention avec des voies hétérogènes en termes de RSB dans un récepteur avec recombinaison MRC (étape 104_2) et comprenant Q = 2 antennes (image de droite) comparé à la réception avec une seule antenne (image de gauche).

L'image $IM_{SISO}$ est l'image obtenue dans le cas d'un rapport signal sur bruit égal à RSBO - 10 dB dans le cas d'une seule antenne ; l'image $IM_{SIMO}$ est l'image obtenue selon l'invention dans le cas d'un rapport signal sur bruit égal à RSBO - 10 dB sur une des deux voies et d'un rapport signal sur bruit égal à RSBO + 10 dB sur l'autre voie : si une voie reçoit un signal nettement plus faible qu'une autre voie dans un récepteur selon l'invention, suite à un masquage ou à un dépointage d'antenne par exemple, la recombinaison MRC (étape 104_2) surpondère automatiquement alors la meilleure voie de réception.

## Revendications

1. Procédé de traitement d'un signal analogique modulé en fréquence, mis en oeuvre par un récepteur (10) de communications sans fil, ledit procédé comprenant les étapes suivantes :

   - réception par ledit récepteur (10) dudit signal analogique ($S_{FM}(t)$ ) modulé en fréquence par un signal utile (s) ;
   - traitement dudit signal reçu comprenant une démodulation en fréquence dudit signal analogique reçu ; ledit procédé étant tel que, le récepteur (10) comprenant Q antennes de réception ($A_1$, ..., $A_Q$) et Q voies de traitement (CH1, ..., CHQ) associées chacune à une antenne respective, avec $Q \geq 2$, les étapes suivantes sont mises en oeuvre par le récepteur, pour obtenir le signal démodulé :
   - i/ ladite réception comprend la réception, par chacune des antennes associées aux voies, du signal analogique modulé en fréquence, et ledit traitement comprend, sur chaque voie q, q = 1 à Q, l'échantillonnage du signal reçu par l'antenne associée à la voie q et l'obtention, par transposition dudit signal échantillonné en bande de base, des échantillons complexes $m_q(n)$ ;
   - ii/ obtention, sur chaque voie q (CHq), d'une première estimation des valeurs de signal utile $\hat{s}_q(n)$ en fonction desdits échantillons complexes $m_q(n)$ obtenus sur la voie q ;

   - iii/ sur chaque voie q, estimation du rapport signal sur bruit $\widehat{RSB}_q$ en calculant $\widehat{RSB}_q = \dfrac{S_q}{2.B_q}$ , avec $S_q = $ $mod\_moy_q{}^2$, $B_q = \dfrac{1}{N}.\sum_{n=1}^{N}\left(mod\_moy_q - |m_q(n)|\right)^2$ et $mod\_moy_q = \sqrt{\dfrac{1}{N}.\sum_{n=1}^{N}|m_q(n)|^2}$ , où N est un entier fixé ;

   - iv/ puis détermination d'une seconde estimation $\hat{s}(n)$ du signal utile en fonction des Q estimations du rapport signal sur bruit $\widehat{RSB}_q$ , q= 1 à Q et en fonction d'au moins une desdites premières estimations obtenues $\hat{s}_q(n)$ du signal utile, q = 1 à Q.

2. Procédé de traitement d'un signal analogique ($S_{FM}(t)$) modulé en fréquence selon la revendication 1, comprenant, à l'étape iv/, une étape de comparaison entre elles des Q estimations du rapport signal sur bruit $\widehat{RSB}_q$ q= 1 à Q, puis une étape de détermination, en fonction de ladite comparaison, de quelle est la voie q0 parmi les voies 1 à Q (CHq, q= 1 à Q) sur laquelle le rapport signal sur bruit estimé est le plus grand, et la seconde estimation $\hat{s}(n)$ du signal utile est déterminée comme égale à ladite première estimation obtenue $\hat{s}_{q0}(n)$ du signal utile.

3. Procédé de traitement d'un signal analogique ($S_{FM}(t)$) modulé en fréquence selon la revendication 1, selon lequel, à l'étape iv/, on détermine la seconde estimation $\hat{s}(n)$ du signal utile, pour $n \in [1; N]$ en calculant :

$$\hat{s}(n) = \sum_{q=1}^{Q} \frac{\widehat{RSB}_q}{\widehat{RSB}_{tot}} . \hat{s}_q(n)$$

avec

$$\widehat{RSB}_{tot} = \sum_{q=1}^{Q} \widehat{RSB}_q .$$

4. Procédé de traitement d'un signal analogique ($S_{FM}(t)$) modulé en fréquence selon l'une quelconque des revendications précédentes, selon lequel à l'étape ii, on obtient sur chaque voie q, une première estimation des valeurs de signal utile $\hat{s}_q(n)$ en fonction desdits échantillons complexes $m_q(n)$ obtenus sur la voie q, par la formule suivante :

$$\hat{s}_q(n) = \frac{F_e}{2\pi.\Delta f}.arg\big(m_q(n).m_q(n-1)^*\big), \qquad q \in [1;Q]$$

où $\Delta f$ est l'excursion de fréquence du signal modulé et $F_e$ la fréquence d'échantillonnage.

5. Procédé de traitement d'un signal analogique ($S_{FM}(t)$) modulé en fréquence selon l'une quelconque des revendications précédentes, selon lequel le signal utile (s) comprend une vidéo analogique au standard PAL ou NTSC.

6. Programme d'ordinateur, destiné à être stocké dans la mémoire d'un récepteur (10) de communication sans fil d'un signal analogique modulé en fréquence et comprenant en outre un microcalculateur, ledit programme d'ordinateur comprenant des instructions qui, lorsqu'elles sont exécutées sur le microcalculateur, mettent en oeuvre les étapes d'un procédé selon l'une des revendications précédentes.

7. Récepteur de communications sans fil (10) adapté pour traiter un signal de communication analogique ($S_{FM}(t)$) modulé en fréquence, ledit récepteur (10) étant adapté pour recevoir le signal analogique ($S_{FM}(t)$) modulé en fréquence par un signal utile (s) et ledit traitement du signal reçu comprenant une démodulation en fréquence dudit signal analogique reçu ; ledit récepteur (10) étant tel qu'il comprend Q antennes de réception ($A_1$, ..., $A_Q$) adaptées chacune pour recevoir le signal analogique modulé en fréquence et Q voies de traitement (CH1, ..., CHQ) associées chacune à une antenne respective, avec $Q \geq 2$, et que le traitement par le récepteur sur chaque voie de traitement q, q = 1 à Q comprend :

    i/ l'échantillonnage du signal reçu par l'antenne associée à la voie q et l'obtention, par transposition dudit signal échantillonné en bande de base, des échantillons complexes $m_q(n)$ ;
    ii/ l'obtention, sur chaque voie q, d'une première estimation des valeurs de signal utile $\hat{s}_q(n)$ en fonction desdits échantillons complexes $m_q(n)$ obtenus sur la voie q ;

    iii/ sur chaque voie q, l'estimation du rapport signal sur bruit $\widehat{RSB}_q$ en calculant $\widehat{RSB}_q = \frac{S_q}{2.B_q}$ , avec $S_q = mod\_moy_q{}^2$, $B_q = \frac{1}{N}.\sum_{n=1}^{N}\big(mod\_moy_q - |m_q(n)|\big)^2$

$$mod\_moy_q = \sqrt{\frac{1}{N}.\sum_{n=1}^{N}|m_q(n)|^2}$$

où N est un entier fixé ;
le récepteur (10) étant adapté pour déterminer une seconde estimation $\hat{s}(n)$ du signal utile en fonction des Q estimations du rapport signal sur bruit $\widehat{RSB}_q$, q= 1 à Q et en fonction d'au moins une desdites premières estimations obtenues $\hat{s}_q(n)$ du signal utile, q = 1 à Q.

8. Récepteur de communications sans fil (10) selon la revendication 7, adapté pour comparer entre elles les Q estimations du rapport signal sur bruit $\widehat{RSB}_q$ q= 1 à Q, et pour déterminer, en fonction de ladite comparaison, quelle est la voie q0 parmi les voies 1 à Q sur laquelle le rapport signal sur bruit estimé est le plus grand, et pour déterminer la seconde estimation $\hat{s}(n)$ du signal utile comme égale à ladite première estimation obtenue $\hat{s}_{q0}(n)$ du signal utile.

9. Récepteur de communications sans fil (10) selon la revendication 7, adapté pour déterminer la seconde estimation $\hat{s}(n)$ du signal utile, pour n $\in$ [1;N] en calculant :

$$\hat{s}(n) = \sum_{q=1}^{Q} \frac{\widehat{RSB_q}}{\widehat{RSB}_{tot}} \cdot \hat{s}_q(n)$$

avec

$$\widehat{RSB}_{tot} = \sum_{q=1}^{Q} \widehat{RSB_q}$$

**10.** Récepteur de communications sans fil (10) selon l'une quelconque des revendications 7 à 9, dans lequel sur chaque voie q, le traitement par ledit récepteur comprend une première estimation des valeurs de signal utile $\hat{s}_q(n)$ en fonction desdits échantillons complexes $m_q(n)$ obtenus sur la voie q, par la formule suivante :

$$\hat{s}_q(n) = \frac{F_e}{2\pi.\Delta f} \cdot arg\big(m_q(n).m_q(n-1)^*\big), \qquad q \in [1;Q]$$

où $\Delta f$ est l'excursion de fréquence du signal modulé et $F_e$ la fréquence d'échantillonnage.

**Patentansprüche**

**1.** Verfahren zum Verarbeiten eines frequenzmodulierten analogen Signals, implementiert von einem drahtlosen Kommunikationsempfänger (10), wobei das Verfahren die folgenden Schritte umfasst:

- Empfangen, durch den Empfänger (10), des von einem Nutzsignal (s) frequenzmodulierten analogen Signals ($S_{FM}(t)$);
- Verarbeiten des empfangenen Signals, das eine Frequenzdemodulation des empfangenen analogen Signals umfasst;

wobei das Verfahren derart ist, dass, wenn der Empfänger (10) Q Empfangsantennen ($A_1$, ..., $A_Q$) und jeweils mit einer entsprechenden Antenne assoziierte Q Verarbeitungskanäle (CH1, ..., CHQ) umfasst, wobei $Q \geq 2$ ist, die folgenden Schritte durch den Empfänger ausgeführt werden, um das demodulierte Signal zu erhalten:

- i/ der Empfang umfasst den Empfang des frequenzmodulierten Analogsignals durch jede der mit den Kanälen assoziierten Antennen, und die Verarbeitung umfasst auf jedem Kanal q, q = 1 bis Q, das Abtasten des von der mit dem Kanal q assoziierten Antenne empfangenen Signals und das Erhalten der komplexen Samples $m_q(n)$ durch Transponieren des abgetasteten Signals in das Basisband;
- ii/ Erhalten, auf jedem Kanal q (CHq), einer ersten Schätzung der Nutzsignalwerte $\hat{s}_q(n)$ in Abhängigkeit von den auf dem Kanal q erhaltenen komplexen Samples $m_q(n)$;
- iii/ Schätzen, auf jedem Kanal q, des Signal-Rausch-Verhältnisses $\widehat{RSB_q}$ durch Berechnen von

$$\widehat{RSB_q} = \frac{S_q}{2.B_q}, \quad \text{mit } S_q = mod\_moy_q{}^2, \qquad B_q = \frac{1}{N} \cdot \sum_{n=1}^{N}\big(mod\_moy_q - |m_q(n)|\big)^2 \quad \text{und}$$

$$mod\_moy_q = \sqrt{\frac{1}{N} \cdot \sum_{n=1}^{N} |m_q(n)|^2}, \text{ wobei N eine feste ganze Zahl ist;}$$

- iv/ dann Bestimmen einer zweiten Schätzung $\hat{s}(n)$ des Nutzsignals in Abhängigkeit von den Q Schätzungen des Signal-Rausch-Verhältnisses $\widehat{RSB_q}$, q = 1 bis Q, und in Abhängigkeit von mindestens einer der erhaltenen ersten Schätzungen $\hat{s}_q(n)$ des Nutzsignals, q = 1 bis Q.

**2.** Verfahren zum Verarbeiten eines frequenzmodulierten Analogsignals ($S_{FM}(t)$) nach Anspruch 1, das in Schritt iv/ einen Schritt des Vergleichens der Q Schätzungen des Signal-Rausch-Verhältnisses $\widehat{RSB_q}$, q = 1 bis Q, miteinander und dann einen Schritt des Bestimmens, in Abhängigkeit von dem Vergleich, umfasst, welcher der Kanal q0 unter den Kanälen 1 bis Q (CHq, q= 1 bis Q) ist, auf dem das geschätzte Signal-Rausch-Verhältnis am größten ist, und die zweite Schätzung $\hat{s}(n)$ des Nutzsignals als gleich der erhaltenen ersten Schätzung $\hat{s}_{q0}(n)$ des Nutzsignals bestimmt wird.

3. Verfahren zur Verarbeitung eines frequenzmodulierten Analogsignals ($S_{FM}(t)$) nach Anspruch 1, wobei in Schritt iv/ die zweite Schätzung $\hat{s}(n)$ des Nutzsignals für $n \in [1; N]$ bestimmt wird, durch Berechnen von:

$$\hat{s}(n) = \sum_{q=1}^{Q} \frac{\widehat{RSB_q}}{\widehat{RSB}_{tot}} . \hat{s}_q(n)$$

mit

$$\widehat{RSB}_{tot} = \sum_{q=1}^{Q} \widehat{RSB_q}.$$

4. Verfahren zum Verarbeiten eines frequenzmodulierten Analogsignals ($S_{FM}(t)$) nach einem der vorhergehenden Ansprüche, wobei in Schritt ii auf jedem Kanal q eine erste Schätzung der Nutzsignalwerte $\hat{s}_q(n)$ in Abhängigkeit von den auf dem Kanal q erhaltenen komplexen Samples $m_q(n)$ durch die folgende Formel erhalten wird:

$$\hat{s}_q(n) = \frac{F_e}{2\pi.\Delta f} . arg\big(m_q(n).m_q(n-1)^*\big), \qquad q \in [1; Q]$$

wobei $\Delta f$ der Frequenzhub des modulierten Signals und $F_e$ die Abtastfrequenz ist.

5. Verfahren zum Verarbeiten eines frequenzmodulierten Analogsignals ($S_{FM}(t)$) nach einem der vorhergehenden Ansprüche, wobei das Nutzsignal (s) ein analoges Video nach dem PAL- oder NTSC-Standard umfasst.

6. Computerprogramm, bestimmt zum Speichern im Speicher eines drahtlosen Kommunikationsempfängers (10) eines frequenzmodulierten analogen Signals, das außerdem einen Mikrocomputer umfasst, wobei das Computerprogramm Befehle umfasst, die bei Ausführung auf dem Mikrocomputer die Schritte eines Verfahrens nach einem der vorhergehenden Ansprüche implementieren.

7. Drahtloser Kommunikationsempfänger (10), ausgelegt zum Verarbeiten eines frequenzmodulierten analogen Kommunikationssignals ($S_{FM}(t)$), wobei der Empfänger (10) zum Empfangen des frequenzmodulierten analogen Signals ($S_{FM}(t)$) durch ein Nutzsignal (s) ausgelegt ist, und wobei die Verarbeitung des empfangenen Signals eine Frequenzdemodulation des empfangenen analogen Signals umfasst;

wobei der Empfänger (10) derart ist, dass er Q Empfangsantennen ($A_1$, ..., $A_Q$), die jeweils zum Empfangen des frequenzmodulierten Analogsignals ausgelegt sind, und Q Verarbeitungskanäle (CH1, ..., CHQ) umfasst, die jeweils mit einer jeweiligen Antenne assoziiert sind, wobei $Q \geq 2$ ist, und dass die Verarbeitung durch den Empfänger auf jedem Verarbeitungskanal q, q = 1 bis Q, Folgendes umfasst:

i/ Abtasten des Signals, das von der mit dem Kanal q assoziierten Antenne empfangen wird, und Erhalten der komplexen Samples $m_q(n)$ durch Transponieren des abgetasteten Signals in das Basisband;
ii/ Erhalten, auf jedem Kanal q, einer ersten Schätzung der Nutzsignalwerte $\hat{s}_q(n)$ in Abhängigkeit von den auf dem Kanal q erhaltenen komplexen Samples $m_q(n)$;

iii/ Schätzen, auf jedem Kanal q, des Signal-Rausch-Verhältnisses $\widehat{RSB_q}$ durch Berechnen von

$$\widehat{RSB_q} = \frac{S_q}{2.B_q}, \text{ mit } S_q = mod\_moy_q{}^2, \quad B_q = \frac{1}{N}.\sum_{n=1}^{N}\big(mod\_moy_q - |m_q(n)|\big)^2$$

$$mod\_moy_q = \sqrt{\frac{1}{N} \cdot \sum_{n=1}^{N} |m_q(n)|^2}$$

wobei N eine feste ganze Zahl ist;

wobei der Empfänger (10) zum Bestimmen einer zweiten Schätzung $\hat{s}(n)$ des Nutzsignals in Abhängigkeit von den Q Schätzungen des Signal-Rausch-Verhältnisses $\widehat{RSB}_q$ , q = 1 bis Q, und in Abhängigkeit von mindestens einer der erhaltenen ersten Schätzungen $\hat{s}_q(n)$ des Nutzsignals, q = 1 bis Q, ausgelegt ist.

8. Drahtloser Kommunikationsempfänger (10) nach Anspruch 7, ausgelegt zum Vergleichen der Q Schätzungen des Signal-Rausch-Verhältnisses $\widehat{RSB}_q$ , q = 1 bis Q, miteinander, und zum Bestimmen, in Abhängigkeit von dem Vergleich, welcher der Kanal q0 unter den Kanälen 1 bis Q ist, auf dem das geschätzte Signal-Rausch-Verhältnis am größten ist, und zum Bestimmen der zweiten Schätzung $\hat{s}(n)$ des Nutzsignals als gleich der erhaltenen ersten Schätzung $\hat{s}_{q0}(n)$ des Nutzsignals.

9. Drahtloser Kommunikationsempfänger (10) nach Anspruch 7, ausgelegt zum Bestimmen der zweiten Schätzung $\hat{s}(n)$ des Nutzsignals, für $n \in [1; N]$, durch Berechnen von:

$$\hat{s}(n) = \sum_{q=1}^{Q} \frac{\widehat{RSB}_q}{\widehat{RSB}_{tot}} \cdot \hat{s}_q(n)$$

mit

$$\widehat{RSB}_{tot} = \sum_{q=1}^{Q} \widehat{RSB}_q.$$

10. Drahtloser Kommunikationsempfänger (10) nach einem der Ansprüche 7 bis 9, wobei auf jedem Kanal q die Verarbeitung durch den Empfänger eine erste Schätzung der Nutzsignalwerte $\hat{s}_q(n)$ in Abhängigkeit von den auf dem Kanal q erhaltenen komplexen Samples $m_q(n)$ durch die folgende Formel umfasst:

$$\hat{s}_q(n) = \frac{F_e}{2\pi.\Delta f} \cdot arg\big(m_q(n).m_q(n-1)^*\big), \qquad q \in [1; Q]$$

wobei $\Delta f$ der Frequenzhub des modulierten Signals und $F_e$ die Abtastfrequenz ist.

## Claims

1. A method for processing a frequency-modulated analogue signal, implemented by a wireless communication receiver (10), said method comprising the following steps:

   - reception, by said receiver (10), of said analogue signal ($S_{FM}(t)$) which is frequency-modulated by a useful signal (s);
   - processing of said received signal comprising a frequency-demodulation of said received analogue signal;

   said method being such that, the receiver (10) comprising Q reception antennas ($A_1$, ..., $A_Q$) and Q processing channels (CH1, ..., CHQ) each associated with a respective antenna, with $Q \geq 2$, the following steps are implemented by the receiver, in order to obtain the demodulated signal:

   - i/ said reception comprises the reception, by each of the antennas associated with the channels, of the frequency-modulated analogue signal, and said processing comprises, on each channel q, q = 1 to Q, the sampling of the signal received by the antenna associated with the channel q and the obtaining, by transposition of said sampled signal into baseband, of the complex samples $m_q(n)$;

- ii/ the obtaining, on each channel q (CHq), of a first estimation of the useful signal values $\hat{s}_q(n)$ as a function of said complex samples $m_q(n)$ obtained on the channel q;

- iii/ on each channel q, the estimation of the signal-to-noise ratio $\widehat{RSB}_q$ by calculating $\widehat{RSB}_q = \dfrac{S_q}{2.B_q}$ , with

$$S_q = mod\_moy_q^2, \qquad B_q = \frac{1}{N} . \sum_{n=1}^{N} \left( mod\_moy_q - |m_q(n)| \right)^2 \quad \text{and}$$

$$mod\_moy_q = \sqrt{\frac{1}{N} . \sum_{n=1}^{N} |m_q(n)|^2}$$

, in which N is a fixed integer;

- iv/ then the determination of a second estimation $\hat{s}(n)$ of the useful signal as a function of the Q estimations of the signal-to-noise ratio $\widehat{RSB}_q$ , q = 1 to Q, and as a function of at least one of said first estimations obtained $\hat{s}_q(n)$ of the useful signal, q = 1 to Q.

2. The method for processing a frequency-modulated analogue signal ($S_{FM}(t)$) according to claim 1, comprising, in the step iv/, a step of comparing to each another the Q estimations of the signal-to-noise ratio $\widehat{RSB}_q$ , q = 1 to Q, then a step of determining, as a function of said comparison, which is the channel q0, of the channels 1 to Q (CHq, q = 1 to Q), on which the estimated signal-to-noise ratio is the greatest, and the second estimation $\hat{s}(n)$ of the useful signal is determined as equal to said first estimation obtained $\hat{s}_{q0}(n)$ of the useful signal.

3. The method for processing a frequency-modulated analogue signal ($S_{FM}(t)$) according to claim 1, according to which, in step iv/, the second estimation $\hat{s}(n)$ of the useful signal is determined, for $n \in [1; N]$, by calculating:

$$\hat{s}(n) = \sum_{q=1}^{Q} \frac{\widehat{RSB}_q}{\widehat{RSB}_{tot}} . \hat{s}_q(n)$$

with

$$\widehat{RSB}_{tot} = \sum_{q=1}^{Q} \widehat{RSB}_q .$$

4. The method for processing a frequency-modulated analogue signal ($S_{FM}(t)$) according to any one of the preceding claims, according to which, in step ii, a first estimation of the useful signal values $\hat{s}_q(n)$ is obtained on each channel q as a function of said complex samples $m_q(n)$ obtained on the channel q, by the following formula:

$$\hat{s}_q(n) = \frac{F_e}{2\pi . \Delta f} . arg\left( m_q(n) . m_q(n-1)^* \right), \qquad q \in [1; Q]$$

where $\Delta f$ is the frequency deviation of the modulated signal and $F_e$ is the sampling frequency.

5. The method for processing a frequency-modulated analogue signal ($S_{FM}(t)$) according to any one of the preceding claims, according to which the useful signal (s) comprises an analogue video to the PAL or NTSC standard.

6. A computer program, intended to be stored in the memory of a wireless communication receiver (10) of a frequency-modulated analogue signal and further comprising a microcomputer, said computer program comprising instructions which, when they are executed on the microcomputer, implement the steps of a method according to one of the preceding claims.

7. A wireless communication receiver (10) suitable for processing a frequency-modulated analogue communication signal ($S_{FM}(t)$), said receiver (10) being suitable for receiving the analogue signal ($S_{FM}(t)$) frequency-modulated by a useful signal (s) and said processing of the received signal comprising a frequency-demodulation of said received analogue signal;

said receiver (10) being such that it comprises Q reception antennas ($A_1$, ..., $A_Q$) each suitable for receiving the frequency-modulated analogue signal and Q processing channels (CH1, ..., CHQ) each associated with a respective antenna, with $Q \geq 2$, and that the processing, by the receiver, on each processing channel q, q = 1 to Q, comprises:

i/ the sampling of the signal received by the antenna associated with the channel q and the obtaining, by transposition of said sampled signal into baseband, of the complex samples $m_q(n)$;
ii/ the obtaining, on each channel q, of a first estimation of the useful signal values $\hat{s}_q(n)$ as a function of said complex samples $m_q(n)$ obtained on the channel q;

iii/ on each channel q, the estimation of the signal-to-noise ratio $\widehat{RSB}_q$ by calculating $\widehat{RSB}_q = \dfrac{S_q}{2.B_q}$,

with $S_q$ = $mod\_moy_q{}^2$, $B_q = \dfrac{1}{N}.\sum_{n=1}^{N}\big(mod\_moy_q -$

$$\big|m_q(n)\big|\big)^2 \quad mod\_moy_q = \sqrt{\frac{1}{N}.\sum_{n=1}^{N}\big|m_q(n)\big|^2}$$

where N is a fixed integer;
the receiver (10) being suitable for determining a second estimation $\hat{s}(n)$ of the useful signal as a function of the Q estimations of the signal-to-noise ratio $\widehat{RSB}_q$, q = 1 to Q, and as a function of at least one of said first estimations obtained $\hat{s}_q(n)$ of the useful signal, q = 1 to Q.

8. The wireless communication receiver (10) according to claim 7, suitable for comparing to each other the Q estimations of the signal-to-noise ratio $\widehat{RSB}_q$, q = 1 to Q, and for determining, as a function of said comparison, which is the channel q0 of the channels 1 to Q on which the estimated signal-to-noise ratio is the greatest, and for determining the second estimation $\hat{s}(n)$ of the useful signal as equal to said first estimation obtained $\hat{s}_{q0}(n)$ of the useful signal.

9. The wireless communication receiver (10) according to claim 7, suitable for determining the second estimation $\hat{s}(n)$ of the useful signal, for $n \in [1; N]$, by calculating:

$$\hat{s}(n) = \sum_{q=1}^{Q} \frac{\widehat{RSB}_q}{\widehat{RSB}_{tot}}.\hat{s}_q(n)$$

with

$$\widehat{RSB}_{tot} = \sum_{q=1}^{Q} \widehat{RSB}_q.$$

10. The wireless communication receiver (10) according to any one of claims 7 to 9, wherein, on each channel q, the processing, by said receiver, comprises a first estimation of the useful signal values $\hat{s}_q(n)$ as a function of said complex samples $m_q(n)$ obtained on the channel q, by the following formula:

$$\hat{s}_q(n) = \frac{F_e}{2\pi.\Delta f}.arg\big(m_q(n).m_q(n-1)^*\big), \qquad q \in [1; Q]$$

where $\Delta f$ is the frequency deviation of the modulated signal and $F_e$ is the sampling frequency.

EP 4 203 403 B1

MOD FM

$S_{FM}(t)$

$A_0$

s

11

$A_1$

20_1  21_1  CH1  22_1

CAN (Fe)  TRANSP  $m_1(n)$  DEMOD FM NUM  $\hat{s}_1(n)$

23_1  EST RSB  $\hat{RSB}_1$

$A_2$

CAN (Fe)  TRANSP  $m_2(n)$  DEMOD FM NUM  22_2  CH2  $\hat{s}_2(n)$

23_2  EST RSB  $\hat{RSB}_2$

$A_Q$

20_Q  21_Q  CHQ  22_Q

CAN (Fe)  TRANSP  $m_Q(n)$  DEMOD FM NUM  $\hat{s}_Q(n)$

23_Q  EST RSB  $\hat{RSB}_Q$

DET. $\hat{s}(n)$  $\hat{s}(n)$

24

10

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7697913 B2

**Littérature non-brevet citée dans la description**

- A link quality indicator for analog FM transmission systems. **BRENDEL JOHANNES et al.** 7TH INTERNATIONAL CONFERENCE ON SIGNAL PROCESSING AND COMMUNICATION SYSTEMS (ICSPCS). IEEE, 16 Décembre 2013